**Europäisches Patentamt**

**European Patent Office**

**Office européen des brevets**

(19)

(11) Veröffentlichungsnummer: **0 415 016 A2**

## (12) EUROPÄISCHE PATENTANMELDUNG

(21) Anmeldenummer: **90111312.6**

(22) Anmeldetag: **15.06.90**

(51) Int. Cl.5: **B23C 5/24**, B23C 5/00

(30) Priorität: **01.09.89 DE 3929007**

(43) Veröffentlichungstag der Anmeldung:
**06.03.91 Patentblatt 91/10**

(84) Benannte Vertragsstaaten:
**DE FR GB IT**

(71) Anmelder: **Wilhelm Fette GmbH**
**Postfach 1180 Grabauerstrasse 24**
**W-2053 Schwarzenbek(DE)**

(72) Erfinder: **Bentjens, Bernd**
**Falkenweg 7**
**W-2053 Schwarzenbek(DE)**

(74) Vertreter: **Minetti, Ralf, Dipl.-Ing.**
**Ballindamm 15**
**W-2000 Hamburg 1(DE)**

(54) **Scheibenfräser mit Wendeplatten und verstellbarer Schnittbreite.**

(57) Der Scheibenfräser (1) für verstellbare Schnittbreiten besitzt einen Grundkörper, der aus zwei Scheiben (2, 3) besteht, die jeweils klauenartig ausgebildete Stollen (4, 5) tragen, welche mit Wendeplatten (6, 7) versehen sind. Die Anordnung ist dabei derart getroffen, daß die Stollen (4) der einen Scheibe (2) kupplungsartig in eine Kammer (13') zwischen zwei Stollen (5) der anderen Scheibe (3) eingreifen, wobei der axiale Abstand der beiden Scheiben (2, 3) einstellbar ist und sich einhalten läßt durch auswechselbare Distanzhalter (14, 17), die als Ringe ausgebildet sein können. Dadurch läßt sich eine Veränderung der Schnittbreite unter nur sehr geringem Arbeitsaufwand herbeiführen.

Fig. 3

EP 0 415 016 A2

## SCHEIBENFRÄSER MIT WENDESCHNEIDPLATTEN UND VERSTELLBARER SCHNITTBREITE

Die Erfindung betrifft einen Scheibenfräser mit tangential und in Kreuzverzahnung angeordneten Wendeschneidplatten aus Hartmetall und verstellbarer Schnittbreite.

Bei einem bekannten Scheibenfräser mit einstellbaren Schnittbreiten ist der Grundkörper einteilig ausgebildet und trägt über seinen Umfang gleichmäßig verteilt angeordnete Stollen, zwischen denen sich Kammernbefinden für die Aufnahme jeweils einer Kassette, welche eine Wendeplatte trägt, wobei die Wendeplattenin Kreuzverzahnung angeordnet sind. Für die Halterung der Kassetten sind keilartige Spannelemete vorgesehen, die ebenfalls jeweils durch eine Schraube gehalten sind. Für eine Änderung der Schnittbreite um beispielsweise einen oder mehrere Millimeter müssen zunächst die Spannelemente gelöst werden und danach unter Zuhilfenahme von Einstellschrauben die einzelnen Kassetten, welche jeweils eine Wendeplatten tragen, auf die neue gewünschte Schnittbreite verstellt und danach wieder gesichert werden. Wenn ein derartiger Scheibenfräser also beispielsweise achtzehn in Kreuzverzahnung angeordnete Wendeschneidplatten trägt, so müssen achtzehn Spannelemente einzeln gelöst werden, danach achtzehn Kassetten verstellt und anschließend wieder in der neuen Stellung gesichert werden. Derartiges ist mit einem erheblichen Aufwand verbunden. Ein weiterer Nachteil liegt darin, daß durch die Aufteilung des Umfanges des Fräsers in Stollen, Kassetten und Spannelementen nur eine große Zahnteilung und damit nur der Einsatz einer verhältnismäßig geringen Anzahl von Wendeschneidplatten möglich ist.

Um dem abzuhelfen und einen Scheibenfräser zu schaffen, dessen Veränderung der Schnittbreite nur unter geringem Arbeitsaufwand notwendig ist, sieht die Erfindung vor, daß der Grundkörper des Scheibenfräsers aus zwei Scheiben besteht, die klauenartig ineinander greifende Stollen tragen, so daß die Stollen der einen Scheibe jeweils kupplungsartig in eine Kammer zwischen zwei Stollen der anderen Scheibe eingreifen, wobei die Wendeplatten unmittelbar auf der Außenseite der Stollen befestigt sind, so daß sich durch eine Verstellung des Abstandes der beiden Scheiben zueinander die Schnittbreite verändern läßt, ohne daß es einer Verstellung der einzelnen Wendeplatten bedarf. Mit der Verstellung der einen Scheibe zu der anderen werden vielmehr gleichzeitig alle Wendeplatten verstellt, so daß es eines erheblich geringeren Arbeitsaufwandes bedarf. Darüber hinaus ergibt sich als wesentlicher Vorteil der erfindungsgemäßen Anordnung, daß sich durch den Fortfall von kassettenartigen Trägern und zusätzlichen Spannelementen eine wesentlich engere Zahnteilung eine wesentlich engere Zahnteilung herbeiführen läßt und damit der Einsatz einer größeren Anzahl von Wendeschneidplatten herkömmlicher Größe.

Der Zusammenhalt der beiden Scheiben, die gemeinsam den Grundkörper des Scheibenfräsers bilden, erfolgt vorzugsweise durch Schrauben, welche sich durch Durchstecköffnungen der einen Scheibe in Gewindebohrungen der anderen Scheibe erstrecken, wobei es sich als vorteilhaft gezeigt hat, wenn diese Schrauben in der Anzahl der Stollen vorhanden sind, die von einer Scheibe getragen werden.

Eine Einstellung des Fräsers auf eine gewünschte Schnittbreite läßt sich durch die Anordnung von Distanzkörpern zwischen den beiden Scheiben auf handwerklich sehr einfache Weise herbeiführen. Diese Distanzhalter können aus einzelnen Scheiben bestehen, welche beispielsweise als Ringscheiben auf die Verbindungsschrauben aufzustecken sind und durch ein vorhergehendes Planfräsen auf eine gleiche Stärke gebracht sind. Als noch einfacher in der Handhabung hat es sich jedoch gezeigt, wenn als Distanzhalter zwei Ringe vorgesehen werden, die konzentrisch angeordnet sind, wobei der innenliegende Ring als sogenannter Fräsdornring ausgebildet sein kann.

Die Stollen, welche die einzelnen Wendeplatten tragen, und zwar jeweils mindestens eine, sind vorzugsweise an ihrer Vorder- und Rückseite abgeschrägt oder abgerundet, um verhältnismäßig große Spankammern r zwischen den aufeinander folgenden kreuzwise angeordneten Wendeplatten beziehungsweise ihren sie tragenden Stollen auszubilden.

Ein besonderer Vorzug der Erfindung liegt darin, daß die beiden Scheiben des Grundkörpers gleich oder zumindest nahezu gleichförmig ausgebildet sein können. Ein Unterschied braucht sich nur insoweit zu erge ben, als die eine Scheibe mit Durchstecköffnungen für die Halteschrauben versehen ist, während die andere Scheibe Gewindebohrungen aufweist und weiterhin daß bei einer ungeraden Zahl von Stollen die Nut in der Zentralöffnung im einen Fall zu einem Stollen ausgerichtet ist und im anderen Fall zu einer Kammer zwischen den Stollen. Da die Ausbildung dieser Teile des Fräsers jedoch erst nach Herstellung der Scheiben in ihrer Grundform notwendig ist, bleibt der wirtschaftliche Nutzen, die beiden Scheiben bei der Ausbildung ihrer Grundstruktur in gleicher Form herzustellen.

Ein Ausführungsbeispiel der Erfindung und die sich aus ihm ergebenden Vorteile sind nachstehend unter Bezugnahme auf eine Zeichnung erläutert.

In der Zeichnung zeigen:

Fig. 1: Einenbekannten Scheibenfräser in der Teilansicht.

Fig. 2: Der Fräser nach der Erfindung in perspektivischer Darstellung.

Fig. 3: Einen Schnitt durch den Fräser nach Fig. 2.

Fig. 4: Den Fräser in der Seitenansicht in Teildarstellung.

Fig. 5: Die Innenseite einer Fräserscheibe.

Fig. 6: Zwei Distanzringe eines Scheibenfräsers.

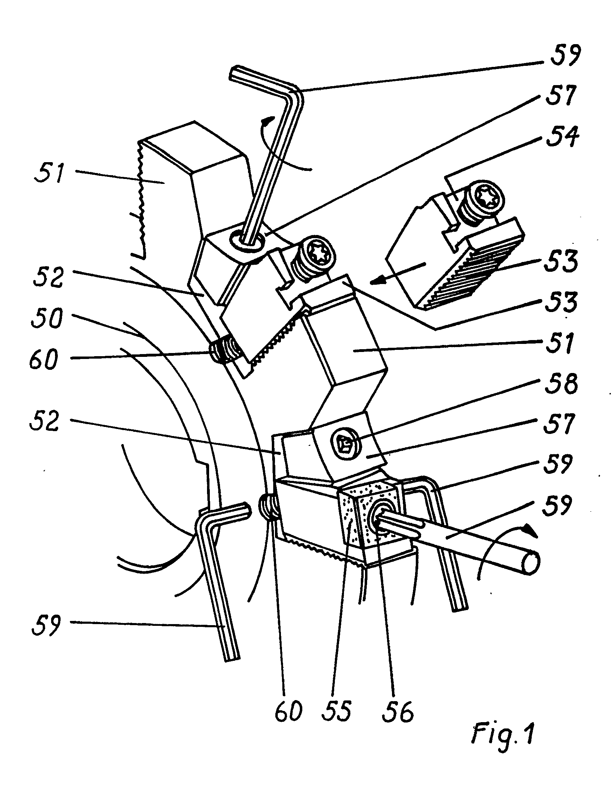

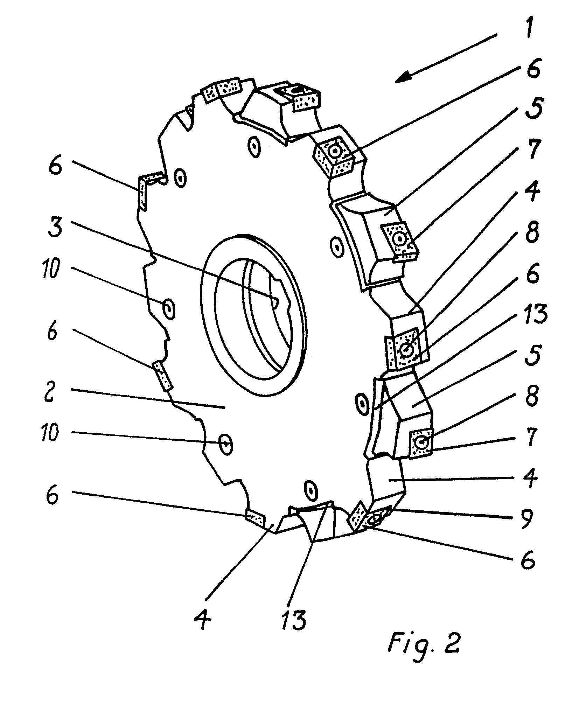

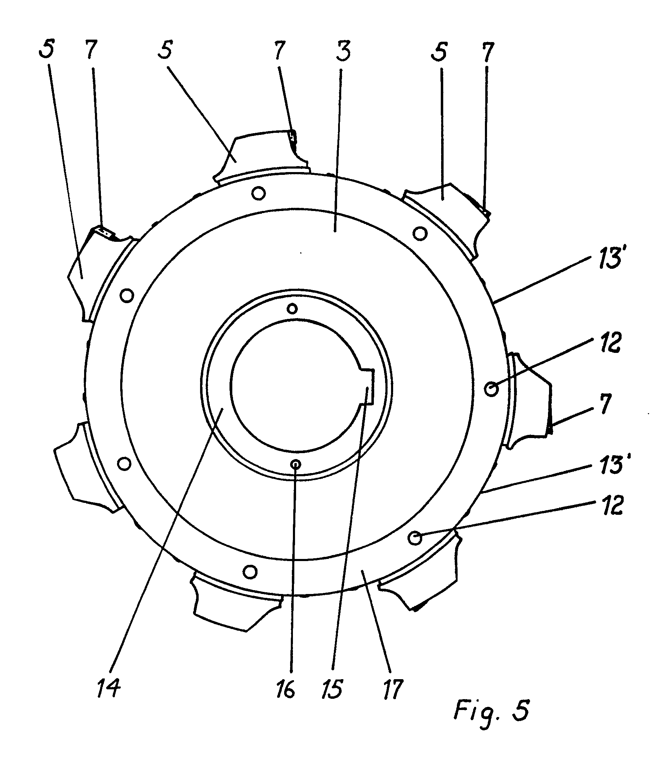

Bei einem bekannten Fräser gemäß Figur 1 ist der Grundkörper 50 einteilig ausgebildet. Er trägt auf seinem Umfang gleichmäßig verteilt angeordnete Stollen 51 zwischen denen sich Kammern 52 befinden. Diese Kammern 52 dienen der Aufnahme von Kassetten 53, die jeweils in einer Kammer 54 eine Wendeplatte 55 tragen, wobei die Anordnung so getroffen ist, daß die Wendeplatten in Kreuzverzahnung, das heißt abwechselnd über den linken Rand und rechten Rand vorstehend schneiden. Die im einzelnen durch Schrauben 56 gehaltenen Wendeplatten 55 sind in axialer Richtung durch die Verstellung von Einstellschrauben 60 verstellbar. Zuvor und anschließend bedarf es jedoch des Lösens und Festziehens von keilförmigen Spannelementen57, die dafür ebenfalls mit Schrauben 58 versehen sind, welche durch Schlüssel 59, wie auch die Einstellschrauben 60 zu betätigen sind. Die Veränderung der wirksamen Schnittbreite des Fräsers erfordert demzufolge einen erheblichen Arbeitsaufwand. Anders liegen die Verhältnisse bei einem Fräser nach den Figuren 2 bis 6.

Der Scheibenfräser 1 nach den Figuren 1 bis 6 besitzt einen Grundkörper, der aus einer ersten Scheibe 2 und einer zweiten Scheibe 3 besteht. Die erste Scheibe 2 trägt sieben Stollen 4 und die zweite Scheibe 3 ebenfalls sieben Stollen 5. Zwischen den Stollen 4 der Scheibe 2 liegen Kammern 13 und ebenso zwischen den Stollen 5 der zweiten Scheibe 3. Da die Stollen 4 und 5 jeweils rechtwinklig zur Ebene der Scheiben 2 und 3 und deren Innenseite vorstehend ausgerichtet sind, greifen die klauenartig ausgebildeten Stollen jeweils kupplungsartig in eine Kammer zwischen den Stollen der danebenliegenden Scheibe. Auf ihrer Außenseite sind die Stollen 4 und 5 jeweils mit einer Wendeplattenkammer 9 versehen für die Aufnahme von Wendeplatten 6 auf der ersten Scheibe 2 beziehungsweise ihren Stollen 4 und die Aufnahme von Wendeplatten 7 auf den Stollen 5 der zweiten Scheibe 3.

Für den Zusammenhalt der beiden Scheiben 2 und 3 sind Schrauben 10 vorgesehen, deren Anzahl derjenigen der Stollen einer Scheibe entspricht, nämlich sieben. Diese Schrauben 10 erstrecken sich durch Durchstecköffnungen 11 der ersten Scheibe 2 in Gewindebohrungen 12 der zweiten Scheibe 3.

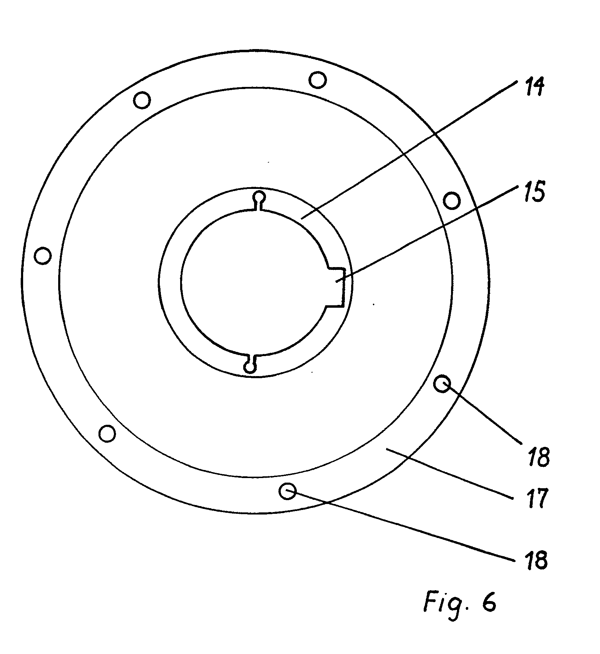

Der Abstand der beiden Scheiben 2 und 3 zueinander und damit die wirksame Schnittbreite des Scheibenfräsers 1 läßt sich einstellen durch die Anwendung verschieden starker Distanzhalter. Bei dem in der Zeichnungen wiedergegebenen Ausführungsbeispiel sind diese Distanzhalter als innerer Distanzring 14 und als äußerer Distanzring 17 ausgebildet. Dabei ist der innere Distanzring als sogenannter Fräsdornring gestaltet, das heißt mit einer Nut 15 versehen für die Aufnahme eines Keiles der nicht dargestellten Antriebswelle. Der innere Distanzring 14 ist mit Aufnahmen 16 zum Durchstecken von Schrauben für seine Befestigung versehen. Ebenso trägt der äußere Distanzring Durchstecköffnungen 18 (Figur 6) für die Schrauben 10, mit denen die beiden Scheiben 2 und 3 zu verbinden sind.

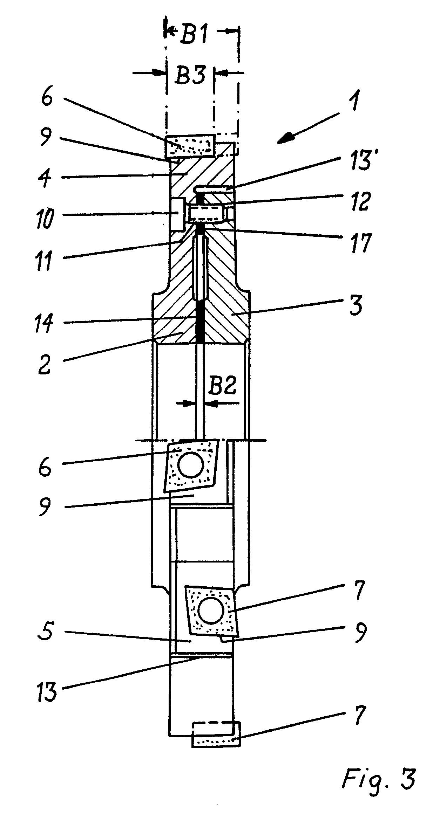

Die Schnittbreite B 1 des Scheibenfräsers ergibt sich einerseits aus der Breite B 3 der Wendeplatten und dem Abstand B 2 der beiden Scheiben 2 und 3 zueinander. Dabei sind große Schnittbreitenveränderungen möglich, ohne daß es für den einen oder anderen Fall größerer Umstellungen bedarf. Eine Begrenzung der Schnittbreite ergibt sich allein dadurch, daß eine gegenseitige Überdeckung der Wendeplatten 6 und 7 (Figur 3 oben) gegeben ist beziehungsweise die Schneidenbreite B 1 kleiner ist als die doppelte Breite B 3 der Wendeplatten.

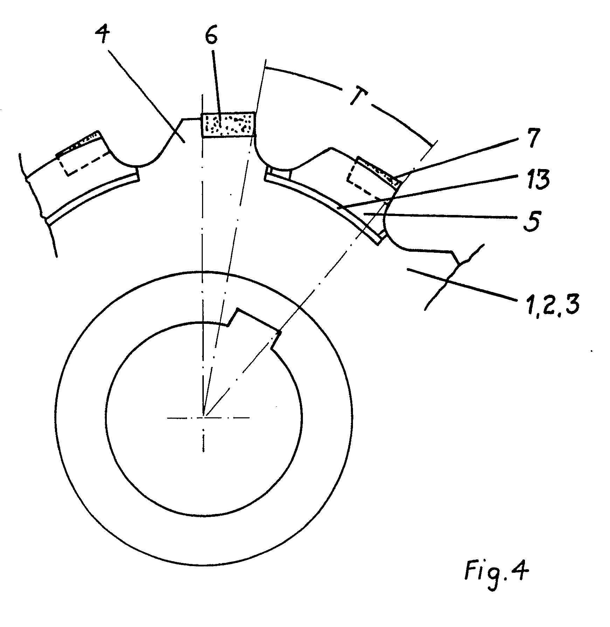

Die Stollen 4 und 5 sind an ihrer Vorder- und Rückseite abgeschrägt beziehungsweise abgerundet, so daß sich verhältnismäßig große Spankammern 20 ergeben. Dabei kann die Teilung T gemäß Figur 4 sehr eng sein aufgrund des Fortfalles zusätzlicher Bestandteile für die Aufnahme und Halterung der Wendeplatten.

Ein weiterer Vorteil ist darin zu sehen, daß ein Umrüsten des Werkzeuges von einer Schnittbreite auf eine andere Schnittbreite innerhalb weniger Minuten mit hoher Genauigkeit durch Verwendung plangeschliffener Distanzringe erfolgen kann ohne daß es dazu irgendwelcher Einstell- oder Meßoperationen für die genaue Einstellung einzelner Wendeplatten bedarf.

**Ansprüche**

1. Scheibenfräser mit tangential und in Kreuzverzahnung angeordneten Wendeschneidplatten aus Hartmetall und verstellbarer Schnittbreite, dadurch gekennzeichnet, daßder Grundkörper des Scheibenfräsers (1) aus zwei Scheiben (2, 3) besteht, die klauenartig ausgebildete Stollen (4, 5) mit einer Wendeplatte, (6, 7) tragen, von denen die Stollen (4) der einen Scheibe (2) jeweils kupplungsartig in eine Kammer (13`) zwischen zwei Stollen (5) der anderen Scheibe (3) eingreifen.

2. Scheibenfräser nach Anspruch 1, dadurch gekennzeichnet, daß die Stollen (4, 5) rechtwinklig zu der Ebene der Scheibe (2, 3) und zu deren Innenseite vorstehend ausgerichtet sind.

3. Scheibenfräser nach Anspruch 1, dadurch gekennzeichnet, daß die Wendeplatten (6, 7) auswechselbar in Wendeplattenkammern (9) angeordnet sind, die unmittelbar in den Außenseiten der Stollen (4, 5) liegen.

4. Scheibenfräser nach Anspruch 1, dadurch gekennzeichnet, daß der axiale Abstand (B²) der beiden Scheiben (2, 3) einstellbar ist.

5. Scheibenfräser nach Anspruch 1, dadurch gekennzeichnet, daß die eine Scheibe (3) mit Gewindebohrungen (12) und die andere Scheibe (2) mit Durchstecköffnungen (11) für Schrauben (10) versehen ist.

6. Scheibenfräser nach Anspruch 1, dadurch gekennzeichnet, daß zwischen den beiden Scheiben (2, 3) auswechselbare Distanzhalter (14, 17) angeordnet sind.

7. Scheibenfräser nach Anspruch 1, dadurch gekennzeichnet, daß die Distanzhalter (14, 17) als Ringe ausgebildet sind.

8. Scheibenfräser nach Anspruch 7, dadurch gekennzeichnet, daß ein innenliegender Distanzhalter (14) als Fräsdornring ausgebildet ist.

9. Scheibenfräser nach Anspruch 1, dadurch gekennzeichnet, daß die Stollen (4, 5) vorder- und rückseitig abgeschrägt und/oder abgerundet sind.

10. Scheibenfräser nach Anspruch 1, dadurch gekennzeichnet, daß die beiden Scheiben (2, 3) gleich oder nahezu gleichförmig ausgebildet sind.

11. Scheibenfräser nach Anspruch 1, dadurch gekennzeichnet, daß die beiden Scheiben (2, 3) durch Schrauben (10) zusammengehalten sind, deren Anzahl der Zahl der Stollen (4) einer Scheibe (2) entspricht.

Fig.1

Fig. 2

Fig. 3

Fig.4

Fig. 5

*Fig. 6*